# EUROPÄISCHE PATENTANMELDUNG

(11) **EP 4 079 791 A1**
(43) Veröffentlichungstag der Anmeldung: **26.10.2022**
(21) Anmeldenummer: 21169919.4
(22) Anmeldetag: 22.04.2021
(51) Int. Cl.: C08J 3/20, C08J 11/04, C08K 3/22, C08K 3/26, B09B 3/00, B29B 17/04, C10B 47/00, C10B 53/07

(54) **VERFAHREN UND VORRICHTUNG ZUR AUFBEREITUNG VON KUNSTSTOFFMATERIAL**

(71) Anmelder: Coperion GmbH, 70469 Stuttgart (DE)
(72) Erfinder: Dreher, Felix, 70374 Stuttgart (DE); Matta, Marina, 75050 Gemmingen (DE)
(74) Vertreter: Ege Lee & Roider Patentanwälte

(57) **Zusammenfassung**

Verfahren (100) zur Aufbereitung von, insbesondere thermoplastischem, Kunststoffmaterial, wie Kunststoff-Recyclingmaterial und/oder Kunststoffabfall, umfassend folgende Schritte: Zuführen (102) des Kunststoffmaterials in eine Schneckenmaschine (202); Zuführen (104) eines Zusatzstoffes zum Umwandeln von organischen Chloriden in anorganische Chloride in die Schneckenmaschine (202); Plastifizieren (106) des zugeführten Kunststoffmaterials mittels der Schneckenmaschine (202) zu einer Kunststoffschmelze; und Mischen (108) der Kunststoffschmelze mit dem zugeführten Zusatzstoff mittels der Schneckenmaschine (202) zu einer Mischung, wobei zumindest ein Teil der in der Kunststoffschmelze enthaltenen organischen Chloride mittels des Zusatzstoffs in anorganische Chloride umgewandelt wird, sowie eine entsprechende Vorrichtung (200) zur Aufbereitung von, insbesondere thermoplastischem, Kunststoffmaterial, wie Kunststoff-Recyclingmaterial und/oder Kunststoffabfall, mit einer Schneckenmaschine (202).

## Beschreibung

Die Erfindung betrifft ein Verfahren zur Aufbereitung von, insbesondere thermoplastischem, Kunststoffmaterial, wie Kunststoff-Recyclingmaterial und/oder Kunststoffabfall. Außerdem betrifft die Erfindung eine Vorrichtung zur Aufbereitung von, insbesondere thermoplastischem, Kunststoffmaterial, wie Kunststoff-Recyclingmaterial und/oder Kunststoffabfall, sowie eine Verwendung einer solchen Vorrichtung.

Im chemischen Recycling werden Kunststoffabfälle, wie Kunststoff-Recyclingabfälle, die beispielsweise Polyolefine, wie Mischpolyolefine ("mixed polyolefines", MPO), aufweisen können und auf herkömmliche Weise durch mechanisches Recycling nicht mehr verwertbar sind, einem Pyrolysereaktor zugeführt. Als Alternative zur Pyrolyse können andere Stoffumwandlungsprozesse, wie Vergasen (gasification), Fluid Catalytic Cracking (FCC) oder eine Catalytic Hydrothermal Reactor-Technologie (CAT-HTR) zum Einsatz kommen. Ziel der Pyrolyse ist die Umwandlung von langkettigen Polymeren in kurzkettige Oligomere, die in einem anschließenden Destillationsschritt voneinander getrennt werden können. Üblicherweise sind kleine Anlagen in Betrieb, die diskontinuierlich mit den festen Kunststoffabfällen beschickt, im Pyrolysereaktor aufgeschmolzen und bis zu Pyrolysetemperatur erhitzt werden. Die Beschickung des Pyrolysereaktors kann auch mithilfe eines Einwellenextruders erfolgen, der das Material aufschmilzt und erhitzt.

Aus dem Dokument EP 3 237 533 B1 ist beispielsweise eine Polyethylen-Zusammensetzung bekannt, die ein Grund-Harz und einen anorganischen Mineral-Füllstoff aufweist, wobei das Grund-Harz ein erstes aus recyceltem Kabel-Abfall erhaltenen vernetztes Polyethylen und ein zweites, frisches Polyethylen umfasst, um die mechanischen Eigenschaften des Produkts zu verbessern.

Aus dem Dokument JP H11-124463 A ist ein diskontinuierliches Verfahren bekannt, um Polyvinylchlorid bei Temperaturen kleiner 180 °C und einer Reaktionszeit von etwa drei Stunden in einer Kugelmühle in wasserlösliches CaOHCI umzuwandeln, wobei dann in einem nachfolgenden Schritt das CaOHCI ausgewaschen wird.

Eine Beschickung des Pyrolysereaktors mit festen Kunststoffabfällen führt zu einem diskontinuierlichen Vorgang, bei dem die Kunststoffabfälle im Pyrolysereaktors erst aufgeschmolzen werden müssen. Andernfalls sind für die Beschickung aufwändige Dosieranlagen und -systeme notwendig. Dies führt zu einem unnötigen energie- und zeitintensiven Prozess. Ferner werden unerwünschte Bestandteile, wie Feuchte (Wasser) oder Polyvinylchlorid (PVC) in den Pyrolysereaktor gefördert. Auch bei einer Beschickung des Pyrolysereaktor mit Kunststoffschmelze mithilfe eines Einwellenextruders sind die Kapazitäten, wie der Durchsatz oder die Schmelzetemperatur, sehr begrenzt. Um hinreichende Durchsätze zu erhalten, ist der Einsatz von mehreren Einwellenextrudern und/oder mehreren Pyrolysereaktoren notwendig. Das führt jedoch zu einem unwirtschaftlichen und energieintensiven Prozess.

Endverbraucher-Kunststoffabfälle ("post consumer waste") enthalten oft Polyvinylchlorid (PVC). Halogene, wie beispielsweise Chlor oder Brom, sind jedoch im Pyrolysereaktor hinderlich, da diese den Pyrolyseprozess hemmen und sich im Produkt ablagern können. Ferner besteht die Gefahr der Korrosion. Eine Nachbehandlung des Pyrolyseprodukts ist sehr aufwendig und kostenintensiv. Halogenhaltige Verbindungen sollen daher bereits vor der Pyrolyse bestmöglich entfernt werden. Aufgrund von Thermostabilisatoren lässt sich beispielsweise das Polyvinylchlorid innerhalb der Verweilzeit in einem Einwellenextruder kaum degradieren oder entgasen.

Der Erfindung liegt die Aufgabe zugrunde, ein eingangs genanntes Verfahren zur Aufbereitung von, insbesondere thermoplastischem, Kunststoffmaterial funktionell zu verbessern. Außerdem liegt der Erfindung die Aufgabe zugrunde, eine eingangs genannte Vorrichtung zur Aufbereitung von, insbesondere thermoplastischem, Kunststoffmaterial strukturell und/oder funktionell zu verbessern.

Daher ist es eine Aufgabe der vorliegenden Erfindung, ein Aufbereitungsverfahren und eine Aufbereitungsvorrichtung bereitzustellen, welche die im Zusammenhang mit dem Stand der Technik aufgezeigten Probleme reduzieren bzw. beseitigen.

Die Aufgabe wird gelöst mit einem Verfahren mit den Merkmalen des Anspruchs 1. Außerdem wird die Aufgabe gelöst mit einer Vorrichtung mit den Merkmalen des Anspruchs 11. Vorteilhafte Ausführungen und/oder Weiterbildungen sind Gegenstand der Unteransprüche.

Ein Verfahren zur Aufbereitung von, insbesondere thermoplastischem, Kunststoffmaterial, wie Kunststoff-Recyclingmaterial und/oder Kunststoffabfall, kann den Schritt umfassen: Zuführen des Kunststoffmaterials in eine Schneckenmaschine. Das Zuführen des Kunststoffmaterials kann kontinuierlich und/oder dosiert erfolgen. Das Zuführen des Kunststoffmaterials kann diskontinuierlich erfolgen. Das Zuführen des Kunststoffmaterials kann abschnittsweise diskontinuierlich und abschnittsweise kontinuierlich erfolgen. Das Zuführen des Kunststoffmaterials kann über eine Zuführöffnung, insbesondere über eine Zuführöffnung der Schneckenmaschine erfolgen. Die Zuführöffnung kann eine Haupt-Zuführöffnung, wie Haupt-Einlauf, der Schneckenmaschine sein. Das Zuführen des Kunststoffmaterials kann mittels einer Beschickung, wie Beschickungs-einrichtung erfolgen. Die Beschickung kann eine Seitenbeschickung bzw. Seitenbeschickungseinrichtung sein. Das Zuführen des Kunststoffmaterials kann mittels einer Zuführeinrichtung und/oder Dosiereinrichtung erfolgen. Das Zuführen des Kunststoffmaterials kann in eine Einzugszone und/oder Zuführzone der Schneckenmaschine erfolgen. Das Kunststoffmaterial kann Kunststoff-Recyclingmaterial und/oder Kunststoffabfall sein. Das Kunststoffmaterial kann halogenhaltige Bestandteile / Verbindungen aufweisen. Das Kunststoffmaterial kann Polyolefine und/oder Polyvinylchlorid und/oder Polymere aufweisen. Das Kunststoffmaterial kann ein Agglomerat, wie Kunststoffmaterialagglomerat, und/oder ein Recyclat und/oder ein Granulat sein. Das Kunststoffmaterial kann granulatförmig und/oder faserförmig sein. Das Kunststoffmaterial kann Kunststoffgranulat und/oder Kunststofffasern aufweisen oder sein. Das Kunststoffmaterial kann folienförmig oder als Folie ausgebildet sein. Das Kunststoffmaterial kann schnipseiförmig sein. Das Kunststoffmaterial kann Schnipsel, wie Folienschnipsel, aufweisen und/oder sein. Das Kunststoffmaterial kann Kunststofffolien und/oder Kunststofffolienschnipsel aufweisen und/oder sein, beispielsweise Folien und/oder Folienschnipsel mit niedriger Schüttdichte.

Das Verfahren kann den Schritt umfassen: Zuführen eines Zusatzstoffes zum Umwandeln von organischen Chloriden in anorganische Chloride in die Schneckenmaschine. Das Zuführen des Zusatzstoffes kann kontinuierlich und/oder dosiert erfolgen. Das Zuführen des Zusatzstoffes kann diskontinuierlich erfolgen. Das Zuführen des Zusatzstoffes kann abschnittsweise diskontinuierlich und abschnittsweise kontinuierlich erfolgen. Das Zuführen des Zusatzstoffes kann über eine Zuführöffnung, insbesondere über eine Zuführöffnung der Schneckenmaschine erfolgen. Die Zuführöffnung kann die Haupt-Zuführöffnung der Schneckenmaschine sein. Das Zuführen des Zusatzstoffes kann mittels einer Zuführeinrichtung und/oder Dosiereinrichtung erfolgen. Das Zuführen des Zusatzstoffes kann mittels einer Beschickung, wie Beschickungseinrichtung erfolgen. Die Beschickung kann eine Seitenbeschickung bzw. Seitenbeschickungseinrichtung sein. Das Zuführen des Zusatzstoffes kann in eine Einzugszone oder Zuführzone oder Aufschmelzzone oder Mischzone oder Entgasungszone der Schneckenmaschine erfolgen und/oder dieser Zone/n zugeführt werden. Das Zuführen des Zusatzstoffes kann stromabwärts einer Haupt-Zuführöffnung der Schneckenmaschine und/oder stromabwärts einer Einzugszone der Schneckenmaschine erfolgen. Das Zuführen des Zusatzstoffes kann über die Zuführöffnung und/oder mit der Zuführeinrichtung und/oder Dosiereinrichtung und/oder Beschickung, wie Seitenbeschickung, zum Zuführen des Kunststoffmaterials erfolgen. Der Zusatzstoff und das Kunststoffmaterial können über die gleiche Zuführöffnung und/oder mit der gleichen Zuführeinrichtung und/oder Dosiereinrichtung und/oder Beschickung, wie Seitenbeschickung, zugeführt werden. Das Zuführen des Zusatzstoffes und das Zuführen des Kunststoffmaterials kann gleichzeitig bzw. zusammen oder getrennt voneinander oder hintereinander erfolgen. Der Zusatzstoff und das Kunststoffmaterial können zusammen oder getrennt voneinander zugeführt werden. Der Zusatzstoff kann zusammen mit dem Kunststoffmaterial zugeführt werden. Das Zuführen des Zusatzstoffes kann nach oder vor dem Zuführen des Kunststoffmaterials erfolgen. Der Zusatzstoff kann ein Hilfsstoff und/oder Additiv sein. Der Zusatzsoff kann pulverförmig, granulatförmig oder flüssig sein. Der Zusatzstoff kann ein Metallchlorid, ein Metalloxid, ein Metallhydroxid, ein Metallstearat, ein Zeolith oder ein Carbonat sein. Der Zusatzstoff kann ein Metallchlorid und/oder ein Metalloxid und/oder ein Metallhydroxid und/oder Metallstearat/e und/oder ein Zeolith und/oder ein Carbonat aufweisen. Der Zusatzstoff bzw. das Metalloxid kann beispielsweise Calciumoxid (CaO) oder Magnesiumoxid (MgO) sein. Der Zusatzstoff bzw. das Metalloxid kann beispielsweise Branntkalk oder gebrannter Kalk sein. Der Zusatzstoff bzw. das Metallhydroxid kann beispielsweise Calciumhydroxid (CA(OH)2) oder Magnesiumhydroxid Mg(OH)2 sein. Der Zusatzstoff kann beispielsweise ein Erdalkalioxid oder Alkalioxid sein oder aufweisen. Der Zusatzstoff bzw. das Carbonat kann beispielsweise Hydrogencarbonat sein.

Das Verfahren kann den Schritt umfassen: Plastifizieren des zugeführten Kunststoffmaterials mittels der Schneckenmaschine zu einer Kunststoffschmelze. Das Plastifizieren kann ein Aufschmelzen des Kunststoffmaterials sein. Das Plastifizieren kann in der Aufschmelzzone und/oder Mischzone der Schneckenmaschine erfolgen. Die Kunststoffschmelze kann eine Temperatur zwischen 100°C und 400°C, beispielsweise zwischen 300°C und 400°C oder zwischen 200°C und 350°C, insbesondere zwischen 280°C und 330°C, zum Beispiel etwa 320°C aufweisen. Das Plastifizieren kann mittels zumindest einer Behandlungselement-Welle der Schneckenmaschine erfolgen. Das Plastifizieren kann beispielsweise mittels zwei Behandlungselement-Wellen der Schneckenmaschine erfolgen. Die Schneckenmaschine kann eine Mehrwellen-Schneckenmaschine, z.B. eine Zweiwellen-Schneckenmaschine, sein. Die Schneckenmaschine kann als gleichsinnig oder gegensinnig drehangetriebene und/oder dicht kämmende Mehrwellen-Schneckenmaschine ausgebildet und/oder derart angetrieben sein bzw. werden. Die Schneckenmaschine kann ein Extruder, insbesondere ein Mehrwellenextruder, wie Doppelschneckenextruder, sein.

Das Verfahren kann den Schritt umfassen: Mischen der Kunststoffschmelze mit dem zugeführten Zusatzstoff mittels der Schneckenmaschine zu einer Mischung. Das Mischen kann in einer Aufschmelzzone und/oder einer Mischzone der Schneckenmaschine erfolgen. Das Mischen kann mit der zumindest einen Behandlungselement-Welle der Schneckenmaschine erfolgen. Das Mischen kann beispielsweise distributives Mischen, dispersives Mischen und/oder diskontinuierliches Mischen sein. Die zumindest eine Behandlungselement-Welle kann Schneckenelemente, wie Förder- und/oder Misch- und/oder Stau- und/oder Knetelemente, aufweisen. Das Plastifizieren des Kunststoffmaterials und das Mischen der Kunststoffschmelze mit dem zugeführten Zusatzstoff kann im Wesentlichen gleichzeitig, beispielsweise innerhalb einer Zone, wie Aufschmelzzone und/oder Mischzone, der Schneckenmaschine, oder hintereinander erfolgen. Die Mischzone kann stromabwärts der Aufschmelzzone vorgesehen sein.

Während des Plastifizierens des Kunststoffmaterials und/oder während des Mischens der Kunststoffschmelze mit dem Zusatzstoff kann zumindest ein Teil der in der Kunststoffschmelze enthaltenen organischen Chloride mittels des Zusatzstoffs in anorganische Chloride umgewandelt werden. Das Verfahren kann den Schritt umfassen: Umwandeln zumindest eines Teils der in der Kunststoffschmelze enthaltenen organischen Chloride mittels des Zusatzstoffs in anorganische Chloride. Das Umwandeln kann während des Plastifizierens des Kunststoffmaterials und/oder während des Mischens der Kunststoffschmelze mit dem Zusatzstoff erfolgen. Das Umwandeln kann in der Aufschmelzzone und/oder Mischzone der Schneckenmaschine erfolgen. Durch das Umwandeln kann beispielsweise das in der Kunststoffschmelze vorhandene Polyvinylchlorid degradiert bzw. abgebaut werden.

Der Zusatzstoff kann als Katalysator und/oder Reaktant, beispielsweise für Chloride und/oder Chlorwasserstoff wirken. Der Zusatzstoff kann als Katalysator für Chloride wirken. Der Zusatzstoff kann als Reaktant für Chlorwasserstoff, wie Chlorwasserstoffgas, wirken.

Während des Plastifizierens und/oder Mischens und/oder Umwandelns mittels des Zusatzstoffs als Katalysator kann Chlorwasserstoff, insbesondere Chlorwasserstoffgas, gebildet werden. Beispielsweise kann das Degradieren bzw. der Abbau von Polyvinylchlorid mittels des Zustandsstoffs katalytisch erfolgen bzw. beschleunigt werden. Der Abbau bzw. die Degradation kann beispielsweise wie folgt dargestellt sein:

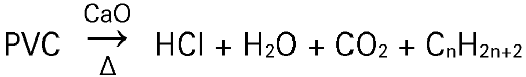

Neben Wasser (H₂O), Kohlenstoffdioxid (CO₂) und/oder Kohlenwasserstoffen (CₙHₘ), wie Alkane (CₙH₂ₙ₊₂) oder Alkene (CₙH₂ₙ), kann Chlorwasserstoff (HCl) frei bzw. gebildet werden.

Bei dem Verfahren kann eine Entgasung der Kunststoffschmelze und/oder der gebildeten Mischung in der Schneckenmaschine, beispielsweise mittels zumindest einer an der Schneckenmaschine angeordneten Entgasungseinrichtung vorgesehen sein bzw. erfolgen. Die Entgasung kann kontinuierlich und/oder gleichzeitig mit dem Plastifizieren und/oder Mischen und/oder Umwandeln erfolgen. Es können mehrere Entgasungen erfolgen bzw. Entgasungseinrichtungen vorgesehen sein. Zumindest eine Entgasung kann in der Aufschmelz-zone, der Mischzone oder einer Entgasungszone der Schneckenmaschine erfolgen. Die wenigstens eine Entgasungseinrichtung kann als Vakuumentgasungseinheit und/oder Seitenentgasungseinheit und/oder als Entgasungsdom und/oder Stopfschnecke ausgebildet sein. Die wenigstens eine Entgasungseinrichtung kann eine Rückhalteeinheit, wie Schmelzerückhalteeinrichtung oder Schmelzerückhalteaggregat, aufweisen. Die Entgasung kann dazu dienen, flüchtige Bestandteile, wie Wasser, z.B. Wasserdampf, oder Gase, z.B. Kohlenwasserstoffe oder Chlorwasserstoffe, die beispielsweise während der Plastifizierung und/oder Mischung und/oder Umwandlung entstehen und/oder aus der Kunststoffschmelze entweichen, zu entfernen und/oder durch eine Entgasungsöffnung der Schneckenmaschine abzuführen / abzusaugen. Zumindest ein Teil des bei der Umwandlung gebildeten Chlorwasserstoffs bzw. Chlorwasserstoffgases kann mittels Entgasung abgeführt bzw. abgesaugt werden.

Während des Plastifizierens und/oder Mischens und/oder Umwandelns kann mittels des Zusatzstoffs als Reaktant ein anorganisches Chlorid, beispielsweise Calciumchlorid oder Magnesiumchlorid, gebildet werden. Beispielsweise kann der Zusatzstoff, wie Calciumoxid (CaO), mit zumindest einem Teil des bei der Umwandlung gebildeten Chlorwasserstoffs (HCl) bzw. Chlorwasserstoffgases (HCl), insbesondere unter Bildung eines anorganischen Chlorids, wie Calciumchlorid (CaCl₂), reagieren. Diese Reaktion kann beispielsweise wie folgt dargestellt sein:

CaO + 2HCl → CaCl₂ + H₂O

Der Zusatzstoff kann somit sowohl als Katalysator als auch als Reaktant fungieren. Es kann vorwiegend Calciumchlorid (CaCl₂) oder Magnesiumchlorid (MgCl₂) entstehen bzw. gebildet werden. Calciumchlorid oder Magnesiumchlorid ist für das weitere Verfahren der Pyrolyse unkritisch und kann bedenkenlos in einen Pyrolysereaktor gefördert werden. Der Siedepunkt von Calciumchlorid kann mit ca. 1670 °C deutlich über einer Betriebstemperatur eines Pyrolysereaktors liegen. Dadurch können weniger oder keine Chloride in eine Destillation geleitet werden.

Die in der Schneckenmaschine verarbeitete Kunststoffschmelze bzw. Mischung kann als Schmelze, beispielsweise am stromabwärts liegenden Ende einer Austragszone der Schneckenmaschine, ausgetragen werden. Die verarbeitete Schmelze kann durch eine Austragsöffnung / Austrittsöffnung, beispielsweise durch eine Düsenplatte, der Schneckenmaschine ausgetragen werden. Die in der Schneckenmaschine verarbeitete Kunststoffschmelze bzw. Mischung kann als Schmelze einem Pyrolysereaktor, insbesondere direkt, zugeführt werden. Die Düsenplatte bzw. Austragsöffnung der Schneckenmaschine kann, beispielsweise direkt oder über eine Zuführleitung, mit einer Zuführung bzw. Eintragsöffnung des Pyrolysereaktors verbunden sein.

Eine Vorrichtung zur Aufbereitung von, insbesondere thermoplastischem, Kunststoffmaterial, wie Kunststoff-Recyclingmaterial und/oder Kunststoffabfall, kann eine Schneckenmaschine umfassen. Die Vorrichtung kann zum Aufbereiten von thermoplastischen Kunststoffmaterial, von Kunststoff-Recyclingmaterial und/oder von Kunststoffabfall dienen. Die Vorrichtung kann eine Aufbereitungsvorrichtung, wie Kunststoffaufbereitungsvorrichtung, sein. Die Vorrichtung kann mit einem oder mehreren zu dem Verfahren beschriebenen Merkmalen ausgebildet bzw. weitergebildet sein. Die Vorrichtung kann zum Verarbeiten und/oder Aufbereiten von Abfallkunststoff dienen. Die Vorrichtung kann zu Recyclingzwecken, insbesondere Kunststoff-Recyclingzwecken, dienen. Die Vorrichtung kann zum Vorbehandeln und/oder Fördern, Plastifizieren, Aufschmelzen, Mischen, Agglomerieren oder Granulieren von Kunststoffmaterial dienen und/oder dazu ausgebildet sein.

Die Schneckenmaschine kann, insbesondere in Förderrichtung, eine Einzugszone und/oder Zuführzone und/oder Aufschmelzzone und/oder Mischzone und/oder Entgasungszone und/oder Austragszone aufweisen. Die Schneckenmaschine kann eine Kompressionszone aufweisen. Die Aufschmelzzone kann stromabwärts der Einzugszone und/oder Zuführzone vorgesehen bzw. angeordnet sein. Die Mischzone kann stromabwärts der Aufschmelzzone vorgesehen bzw. angeordnet sein. Die Austragszone kann stromabwärts der Mischzone vorgesehen bzw. angeordnet sein. In der Einzugszone / Zuführzone kann das Kunststoffmaterial und/oder der Zusatzstoff zugeführt werden. In der Aufschmelzzone kann das Kunststoffmaterial aufgeschmolzen werden. In der Kompressionszone kann das Kunststoffmaterial verdichtet werden. In der Mischzone kann das Kunststoffmaterial vermischt werden. In der Mischzone kann das Kunststoffmaterial mit dem Zusatzstoff vermischt werden. In der Entgasungszone kann das Kunststoffmaterial entgast werden. In der Austragszone kann das Kunststoffmaterial homogenisiert und/oder Druck aufgebaut werden.

Die Schneckenmaschine kann zumindest eine Zuführöffnung zum Zuführen des Kunststoffmaterials in die Schneckenmaschine aufweisen. Die Schneckenmaschine kann zumindest eine Zuführöffnung zum Zuführen eines Zusatzstoffes zum Umwandeln von organischen Chloriden in anorganische Chloride in die Schneckenmaschine aufweisen. Die Schneckenmaschine kann eine Zuführöffnung, wie Haupt-Zuführöffnung oder Haupt-Einlauf, zum Zuführen des Kunststoffmaterials und zum Zuführen eines Zusatzstoffes in die Schneckenmaschine aufweisen. Die Schneckenmaschine kann eine oder mehrere Zuführöffnungen aufweisen. Die Zumindest einen Zuführöffnung kann der Einzugszone und/oder Zuführzone und/oder Aufschmelzzone und/oder Mischzone und/oder Entgasungszone zugeordnet sein oder in diese münden.

Die Schneckenmaschine kann zumindest eine Zuführeinrichtung und/oder Dosiereinrichtung aufweisen. Die zumindest eine Zuführeinrichtung und/oder Dosiereinrichtung kann der zumindest einen Zuführöffnung zugeordnet sein oder mit dieser wirksam verbunden sein. Die zumindest eine Zuführeinrichtung und/oder Dosiereinrichtung kann zum dosierten und/oder kontinuierlichen Zuführen des Kunststoffmaterials und/oder des Zusatzstoffes in die Schneckenmaschine dienen bzw. ausgebildet sein.

Die zumindest eine Zuführeinrichtung und/oder Dosiereinrichtung kann zum Aufnehmen des Kunststoffmaterials ausgebildet sein. Die zumindest eine Zuführeinrichtung und/oder Dosiereinrichtung kann zumindest einen Trichter, wie Einfülltrichter, aufweisen. Die zumindest eine Zuführeinrichtung und/oder Dosiereinrichtung kann beispielsweise zwei Trichter, wie Einfülltrichter, aufweisen. Die zumindest eine Zuführeinrichtung und/oder Dosiereinrichtung kann beispielsweise einen Trichter, wie Einfülltrichter, zum Zuführen des Kunststoffmaterials und einen Trichter, wie Einfülltrichter, zum Zuführen des Zusatzstoffes aufweisen Die zumindest eine Zuführeinrichtung und/oder Dosiereinrichtung kann einen Vorrats- oder Aufbewahrungsbehälter aufweisen. Die zumindest eine Zuführeinrichtung und/oder Dosiereinrichtung kann zum dosierten und/oder kontinuierlichem Abgeben des Kunststoffmaterials und/oder des Zusatzstoffes ausgebildet sein. Die zumindest eine Zuführeinrichtung und/oder Dosiereinrichtung kann dazu ausgebildet sein, der Schneckenmaschine das Kunststoffmaterial und/oder den Zusatzstoff gravimetrisch oder volumetrisch dosiert und/oder kontinuierlich zuzuführen. Die zumindest eine Zuführeinrichtung und/oder Dosiereinrichtung kann eine Zuführschneckenmaschine und/oder Dosierschneckenmaschine aufweisen. Die zumindest eine Zuführeinrichtung und/oder Dosiereinrichtung kann eine gravimetrische oder volumetrische Dosiereinheit, wie Dosierwaage, aufweisen. Die Dosier-einheit kann eine Bandwaage sein. Die Dosiereinheit kann gravimetrisch oder volumetrisch betrieben sein. Die zumindest eine Zuführeinrichtung und/oder Dosiereinrichtung und/oder die Dosiereinheit kann dazu ausgebildet sein, den Stoffstrom, das Volumen und/oder das Gewicht zumindest eines Teils des Kunststoffmaterials bzw. des Kunststoff-Recyclingmaterials und/oder des Zusatzstoffes, insbesondere exakt, zu erfassen.

Die Schneckenmaschine kann ein Gehäuse, wie Zylindergehäuse, aufweisen. Das Gehäuse kann einteilig oder mehrzeilig ausgebildet sein. Das Gehäuse kann ein Verfahrensteil sein. Das Gehäuse kann mehrere Gehäuseabschnitte oder Gehäuseteile aufweisen. Die Gehäuseabschnitte bzw. Gehäuseteile können nacheinander angeordnet sein und/oder zur Ausbildung des Gehäuses miteinander verbunden. In dem Gehäuse kann mindestens eine Gehäusebohrung ausgebildet sein. In dem Gehäuse können zwei zueinander parallele und einander durchdringende bzw. überlappende Gehäusebohrungen ausgebildet sein. Die beiden Gehäusebohrungen können im Querschnitt die Form einer liegenden Acht aufweisen. Die Schneckenmaschine kann zumindest einen Trichter, wie Einfülltrichter, aufweisen. Der Trichter kann der Haupteinlauf der Schneckenmaschine sein. Der Trichter kann am Gehäuse der Schneckenmaschine angeordnet sein. Der Trichter kann mit zumindest einer Zuführöffnung wirksam verbunden sein. Der Trichter kann zum Zuführen des Kunststoffmaterials und/oder Zusatzstoffes dienen. Die zumindest eine Zuführeinrichtung und/oder Dosiereinrichtung kann das Kunststoffmaterial dem Trichter der Schneckenmaschine dosiert und/oder kontinuierlich zuführen. Das Gehäuse der Schneckenmaschine kann die mindestens eine Zuführöffnung aufweisen, die in die mindestens eine Gehäusebohrung mündet. Die zumindest eine Zuführöffnung kann mit dem Trichter wirksam verbunden sein. Das Gehäuse der Schneckenmaschine kann mindestens eine Entgasungsöffnung aufweisen, die in die mindestens eine Gehäusebohrung mündet.

Die Schneckenmaschine kann dazu ausgebildet sein, dass ihr von der zumindest eine Zuführeinrichtung und/oder Dosiereinrichtung zugeführte Kunststoffmaterial aufzuschmelzen und/oder zu plastifizieren. Die Schneckenmaschine kann zumindest eine Behandlungselement-Welle zum Plastifizieren / Aufschmelzen des zugeführten Kunststoffmaterials zu einer Kunststoffschmelze aufweisen. Die zumindest eine Behandlungselement-Welle kann zum Plastifizieren / Aufschmelzen des zugeführten Kunststoffmaterials zu einer Kunststoffschmelze ausgebildet sein. Die zumindest eine Behandlungselement-Welle kann zum Mischen der Kunststoffschmelze mit dem zugeführten Zusatzstoff zu einer Mischung ausgebildet sein, insbesondere so, dass zumindest ein Teil der in der Kunststoffschmelze enthaltenen organischen Chloride mittels des Zusatzstoffs in anorganische Chloride umgewandelt werden kann. Die zumindest eine Behandlungselement-Welle kann eine Extruderwelle bzw. Extruderschnecke sein. Die zumindest eine Behandlungselement-Welle kann einen Durchmesser, wie Außendurchmesser, aufweisen. Die zumindest eine Behandlungselement-Welle kann eine Verfahrenslänge aufweisen. Die Verfahrenslänge kann mindestens das 32-fache des Durchmessers, insbesondere mindestens das 48-fache des Durchmessers, betragen. Die Verfahrenslänge kann > 32 L/D, bevorzugt > 48 L/D sein. Die zumindest eine Behandlungselement-Welle kann Schneckenelemente aufweisen. Die Schneckenelemente können auf der zumindest eine Behandlungselement-Welle drehfest angeordnet, z.B. aufgesteckt, sein. Die Schneckenelemente können Förderelemente, wie vorwärtsfördernde oder rückfördernde Elemente, und/oder Scherelemente und/oder Stauelemente und/oder Knetelement und/oder Mischelemente umfassen. Die Knetelemente können als einzelne Knetscheiben oder als mindestens ein Knetblock mit mehreren einstückig miteinander verbundenen Knetscheiben ausgebildet sein. Die zumindest eine Behandlungselement-Welle kann in dem Gehäuse, insbesondere in der Gehäusebohrung, der Schneckenmaschine angeordnet sein. In jeder Gehäusebohrung der Schneckenmaschine kann eine Behandlungselement-Welle angeordnet sein. Die mehreren Behandlungselement-Wellen, insbesondere die beiden Behandlungselement-Wellen, können konzentrisch angeordnet sein. Die zumindest eine Behandlungselement-Welle kann von einem Antriebsmotor um eine zugehörige Drehachse drehantriebbar sein. Zwischen den Behandlungselement-Wellen kann zumindest ein Verzweigungsgetriebe und/oder eine Kupplung wirksam angeordnet sein. Die mehreren Behandlungselement-Wellen, insbesondere die beiden Behandlungselement-Wellen, können gleichsinnig, also in gleichen Drehrichtungen, oder gegensinnig, also in gegengesetzten Drehrichtungen, um die Drehachsen angetrieben sein oder werden.

Die Schneckenmaschine kann als eine Mehrwellen-Schneckenmaschine, insbesondere Zweiwellen-Schneckenmaschine, ausgebildet sein. Die Schneckenmaschine kann mehrere Behandlungselement-Wellen, beispielsweise zwei Behandlungselement-Wellen, aufweisen. Die Schneckenmaschine kann als gleichsinnig / gleichläufig oder gegensinnig / gegenläufig drehangetriebene und/oder dicht kämmende Mehrwellen-Schneckenmaschine ausgebildet und/oder derart angetrieben sein bzw. werden. Die Schneckenmaschine kann ein Extruder, insbesondere ein Mehrwellenextruder, wie Doppelschneckenextruder, sein. Die mehreren Behandlungselement-Wellen, beispielsweise die zwei Behandlungselement-Wellen, können gleichläufig oder gegenläufig drehangetrieben sein oder werden. Die mehreren Behandlungselement-Wellen, insbesondere die beiden Behandlungselement-Wellen, können dichtkämmend sein.

Die Vorrichtung kann zumindest eine Entgasungseinrichtung aufweisen. Die zumindest eine Entgasungseinrichtung kann an der Schneckenmaschine angeordnet sein. Die zumindest eine Entgasungseinrichtung kann zur Entgasung der Kunststoffschmelze bzw. der gebildeten Mischung in der Schneckenmaschine ausgebildet sein. Die zumindest eine Entgasungseinrichtung kann als Vorwärts-Entgasungseinrichtung und/oder als Rückwärts-Entgasungseinrichtung ausgebildet sein. Es können mehrere Entgasungseinrichtungen vorgesehen sein. Die zumindest eine Entgasungseinrichtung kann in der Aufschmelzzone, der Mischzone, der Entgasungszone oder Austragszone der Schneckenmaschine wirksam angeordnet sein oder dieser/n Zone/n zugeordnet sein. Die wenigstens eine Entgasungseinrichtung kann als Vakuumentgasungseinheit und/oder Seitenentgasungseinheit und/oder als Entgasungsdom und/oder Stopfschnecke ausgebildet sein. Die wenigstens eine Entgasungseinrichtung kann eine Rückhalteeinheit, wie Schmelzrückhalteeinrichtung oder Schmelzerückhalteaggregat, aufweisen. Die zumindest eine Entgasungseinrichtung kann beheizt sein bzw. eine Heizeinheit aufweisen. Beispielsweise können zwei oder drei beheizte Vakuumentgasungseinheiten mit einem Schmelzerückhalteaggregat, wie z.B. einer Seitenentgasung, vorgesehen sein. Die zumindest eine Entgasungseinrichtung kann ein Vakuum mit einem Absolut-Druck zwischen 0 mbar und 1000 mbar, insbesondere zwischen 10 mbar und 800 mbar, und insbesondere zwischen 20 mbar und 400 mbar erzeugen. Beispielsweise kann die zumindest eine Entgasungseinrichtung dazu ausgebildet sein, ein Vakuum mit einem Absolut-Druck von etwa 100 mbar zu erzeugen. Die zumindest eine Entgasungseinrichtung kann dazu ausgebildet sein, einen definierten Volumenstrom zu erzeugen, beispielsweise etwa 20 m³/h. Die Entgasung bzw. die zumindest eine Entgasungseinrichtung kann dazu dienen, flüchtige Bestandteile, wie Wasser, z.B. Wasserdampf, oder Gase, z.B. Kohlenwasserstoffe oder Chlorwasserstoffe, die beispielsweise während der Plastifizierung und/oder Mischung und/oder Umwandlung entstehen und/oder aus der Kunststoffschmelze entweichen, zu entfernen und/oder durch eine Entgasungsöffnung der Schneckenmaschine abzuführen / abzusaugen. Zumindest ein Teil des bei der Umwandlung gebildeten Chlorwasserstoffs bzw. Chlorwasserstoffgases kann mittels Entgasung bzw. mittels der zumindest einen Entgasungseinrichtung abgeführt bzw. abgesaugt werden.

Die Schneckenmaschine kann, insbesondere an ihrem stromabwärts liegenden Ende, beispielsweise am stromabwärts liegenden Ende der Austragszone, eine Austragsöffnung / Austrittsöffnung aufweisen. Die Austragsöffnung / Austrittsöffnung kann so ausgebildet sein, dass durch die Austragsöffnung / Austrittsöffnung die verarbeitete Kunststoffschmelze aus dem Inneren der Schneckenmaschine ausbringbar ist. An der die Austragsöffnung / Austrittsöffnung kann ein, insbesondere formgebendes, Werkzeug, wie Formwerkzeug, angeordnet sein. Die Austragsöffnung / Austrittsöffnung kann durch eine Düsenplatte gebildet sein. Die in der Schneckenmaschine verarbeitete Kunststoffschmelze bzw. Mischung kann als Schmelze einem Pyrolysereaktor, insbesondere direkt, zugeführt werden. Die Austragsöffnung / Austrittsöffnung der Schneckenmaschine kann, beispielsweise direkt und/oder über eine Zuführleitung, mit einer Zuführung bzw. Eintragsöffnung des Pyrolysereaktors verbunden sein. Die Schneckenmaschine und/oder die Zuführleitung kann/können dazu ausgebildet sein, die verarbeitete Kunststoffschmelze dem Pyrolysereaktor, insbesondere kontinuierlich, zuzuführen.

Ein weiterer Aspekt betrifft die Verwendung der vorstehend und/oder nachfolgend beschriebenen Vorrichtung zur Aufbereitung und/oder Recyclieren von, insbesondere thermoplastischem, Kunststoffmaterial, wie Kunststoff-Recyclingmaterial und/oder Kunststoffabfall, wobei zumindest ein Teil der in der Kunststoffschmelze enthaltenen organischen Chloride mittels des Zusatzstoffs in anorganische Chloride umgewandelt wird.

Zusammenfassend und mit anderen Worten dargestellt ergibt sich somit durch die Erfindung unter anderem ein Verfahren und eine Vorrichtung zum Abspalten von Halogenkohlenwasserstoffen aus Kunststoffabfällen ("post consumer waste"). Es kann ein Zusatzstoff, wie Additiv, zugegeben werden, der das Abspalten bewirken und/oder fördern kann. Der Zusatzstoff kann ein Metallchlorid oder Metalloxid, wie Calciumoxid (z.B. Branntkalk), sein. Die Vorrichtung kann ein Doppelschneckenextruder sein. Der Doppelschneckenextruder kann die notwendige Energie, beispielsweise über Scherung, aufbringen. Um möglichst viel Energie in das Produkt einzubringen und/oder eine Solltemperatur zwischen 100°C und 400°C, beispielsweise zwischen 300°C und 400°C oder zwischen 200°C und 350°C, insbesondere zwischen 280°C und 330°C, zum Beispiel > 320 °C, bis zu 380 °C, erreichen zu können, kann die Verfahrenslänge der Vorrichtung bzw. des Doppelschneckenextruders > 32 L/D, vorzugsweise > 48 L/D betragen. Um flüchtige Bestandteile, wie Wasser oder die durch den Abbau entstehenden Gase, wie Kohlenwasserstoffe oder Chlorwasser-stoffe, aus dem Prozess zu entfernen und nicht in den Pyrolysereaktor zu fördern, kann mindestens eine, vorzugweise zwei oder drei, beheizte Vakuumentgasungen mit einem Schmelzerückhalteaggregat, wie z.B. einer Seitenentgasung, vorgesehen sein. Eine Kombination aus Maschinentechnik und Zusatzstoff kann den Prozess optimieren. Durch Zusatz der chemischen Verbindung bzw. des Zusatzstoffes kann der Abbau des Polyvinylchlorids beschleunigt werden. Die Zugabe des Zusatzstoffs kann in den Haupteinlauf der Vorrichtung bzw. des Doppelschneckenextruders erfolgen. Mittels des Zusatzstoffes kann die Degradierung des Polyvinylchlorids im Kunststoffabfall katalytisch beschleunigt werden. Dabei kann neben Wasser, Kohlenstoffdioxid und Kohlenwasserstoffen auch Chlorwasserstoff frei werden. Zum Teil kann dieser Chlorwasserstoff über die Vakuumentgasung abgesaugt werden. Der überwiegende Teil des Chlorwasserstoffs kann mit dem Zusatzstoff, wie Calciumoxid, reagieren, beispielsweise zu Calciumchlorid. Der Zusatzstoff kann somit sowohl als Katalysator als auch als Reaktant fungieren. Das vorwiegend entstehende Calciumchlorid ist unkritisch und kann bedenkenlos in den Pyrolysereaktor gefördert werden, da der Siedepunkt von Calciumchlorid mit 1670 °C deutlich über der Betriebstemperatur des Pyrolysereaktors liegt.

Mit der Erfindung kann sichergestellt werden, dass keine oder zumindest nur wenige Chloride in die Destillation geleitet werden. Die Durchsatzleistung kann erhöht werden, beispielsweise können bis zu 10000 kg/h, insbesondere mittels eines Extruders, kontinuierlich erzielt werden. Es kann eine sehr gute Mischwirkung und/oder Homogenisierung, insbesondere des Zusatzstoffes und/oder der Kunststoffschmelze, erzielt werden. Energie kann über Reibung direkt in das Kunststoffmaterial eingebracht und innerhalb kurzer Zeit, z.B. in 10 bis 180 Sekunden, beispielsweise in 20 bis 120 Sekunden, insbesondere in 30 bis 90 Sekunden, auf Solltemperatur gebracht werden. Eine zusätzliche, externe Heizung kann entfallen. Die Energieeffizient kann gesteigert werden. Die Reaktion kann gleichmäßig und schnell ablaufen. Hohe Raten an Oberflächenerneuerung und/oder eine bessere Entgasung kann ermöglicht werden. Der Abbau von Polyvinylchlorid kann beschleunigt werden. Organisches Chlor bzw. Chlorid kann effizient aus Kunststoffabfällen entfernt werden. Das Verfahren kann kontinuierlich und/oder in einem Schritt stattfinden. Es sind kürzere Verweilzeiten bei hohen Solltemperaturen möglich. Die Pyrolyse kann zu einem sehr hohen Anteil im Pyrolysereaktor stattfinden. Die Ausbeute im Pyrolysereaktor kann gesteigert werden. In der Schmelze vorhandene Wärmeenergie kann weiter genutzt werden. Die Vorrichtung, das Verfahren und die Pyrolyse wird energieeffizienter. Kleinere Maschinengröße mit höheren Füllgraden und/oder Durchsätzen sind realisierbar. Die Umwandlung von organischen in anorganische Chloride kann mit deutlich höheren Siedetemperaturen erfolgen. Durch den Zusatzstoff, wie das überschüssige Calciumoxid, kann eine effiziente Umwandlung, z.B. in unkritisches Calciumchlorid, erfolgen, das den Pyrolyseprozess nicht hemmt und/oder am Ende aus dem Sumpf ausgeschleust werden kann. Es kann weniger Reinigungsaufwand und/oder Wartungsarbeiten im Pyrolysereaktor und/oder den Destillationskolonen sichergestellt werden. Kosten können gespart werden.

Nachfolgend werden Ausführungsbeispiele der Erfindung unter Bezugnahme auf Figuren näher beschrieben, dabei zeigen schematisch und beispielhaft:
- Fig. 1: ein Verfahren zur Aufbereitung von, insbesondere thermoplastischem, Kunststoffmaterial; und
- Fig. 2: eine Vorrichtung zur Aufbereitung von, insbesondere thermoplastischem, Kunststoffmaterial.

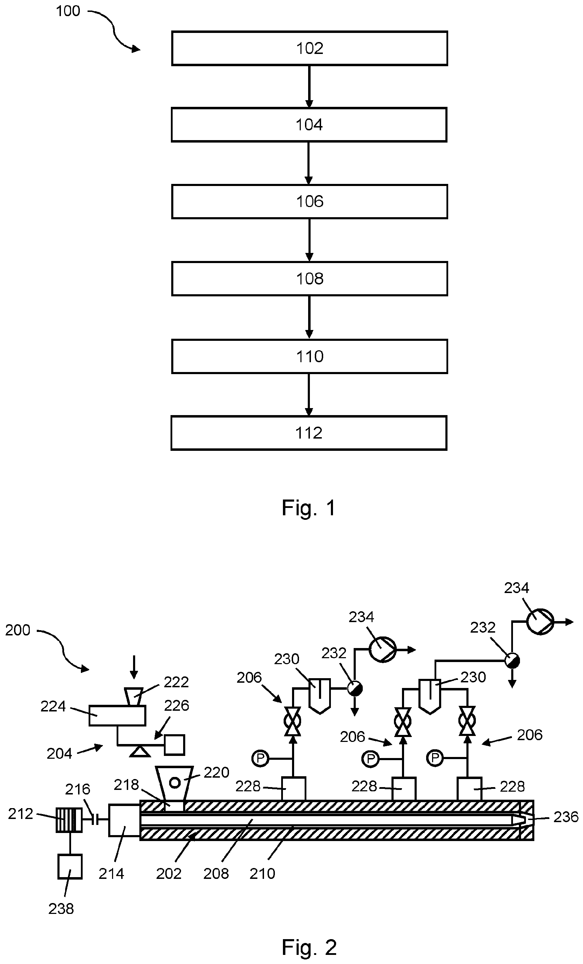

Fig. 1 zeigt schematisch ein Verfahren 100 zur Aufbereitung von, insbesondere thermoplastischem, Kunststoffmaterial, wie Kunststoff-Recyclingmaterial und/oder Kunststoffabfall.

In einem Schritt 102 wird das Kunststoffmaterial in eine Schneckenmaschine zugeführt. Das Zuführen des Kunststoffmaterials kann über eine Zuführöffnung, insbesondere Haupt-Zuführöffnung, der Schneckenmaschine, insbesondere einer Einzugszone der Schneckenmaschine, zugeführt werden. Das Zuführen des Kunststoffmaterials kann kontinuierlich mittels einer Zuführeinrichtung und/oder Dosiereinrichtung erfolgen. Das Kunststoffmaterial kann beispielsweise Polyvinylchlorid aufweisen.

In einem Schritt 104 wird ein Zusatzstoff zum Umwandeln von organischen Chloriden in anorganische Chloride in die Schneckenmaschine zugeführt. Das Zuführen des Zusatzstoffs kann über die Zuführöffnung, insbesondere Haupt-Zuführöffnung, der Schneckenmaschine, insbesondere der Einzugszone der Schneckenmaschine, zugeführt werden. Das Zuführen des Zusatzstoffs kann diskontinuierlich oder kontinuierlich mittels der Zuführeinrichtung und/oder Dosiereinrichtung erfolgen. Der Zusatzstoff kann ein Metallchlorid, Metallhydroxid, Metallstearat, Zeolith, Carbonat oder Metalloxid, wie Calciumoxid oder Magnesiumoxid, sein. Der Zusatzstoff kann pulverförmig sein. Die Zuführschritte 102 und 104 können gleichzeitig oder getrennt voneinander durchgeführt werden.

In einem Schritt 106 wird das zugeführte Kunststoffmaterial mittels der Schneckenmaschine zu einer Kunststoffschmelze plastifiziert bzw. aufgeschmolzen. Die Kunststoffschmelze kann auf eine Solltemperatur zwischen 300 °C und 400 °C, insbesondere etwa 320 °C gebracht werden. Das Plastifizieren kann mittels zumindest einer in der Schneckenmaschine drehbar angeordneten Behandlungselement-Welle erfolgen. Beispielsweise ist die Schneckenmaschine ein Doppelschneckenextruder mit zwei gleichsinnig drehenden und dicht kämmenden Behandlungselement-Wellen, die mehrere verfahrensspezifische Schneckenelemente aufweisen.

In einem Schritt 108 wird die Kunststoffschmelze mit dem zugeführten Zusatzstoff mittels der Schneckenmaschine zu einer Mischung vermischt, wobei zumindest ein Teil der in der Kunststoffschmelze enthaltenen organischen Chloride mittels des Zusatzstoffs in anorganische Chloride umgewandelt werden. Es kann auch ein Umwandlungsschritt zum Umwandeln zumindest eines Teils der in der Kunststoffschmelze enthaltenen organischen Chloride mittels des Zusatzstoffs in anorganische Chloride vorgesehen sein. Der Umwandlungsschritt kann gleichzeitig mit dem Mischschritt 108 und/oder Plastifizierschritt 106 durchgeführt werden. Der Zusatzstoff kann als Katalysator und/oder Reaktant wirken. Während des Plastifizierens und/oder Mischens kann mittels des Zusatzstoffs als Katalysator Chlorwasserstoff, insbesondere Chlorwasserstoffgas, und mittels des Zusatzstoffs als Reaktant ein anorganisches Chlorid, beispielsweise Calciumchlorid oder Magnesiumchlorid, gebildet werden. Dabei kann beispielsweise Polyvinylchlorid katalytisch mithilfe des Calciumoxids bzw. Magnesiumoxids in Wasser, Kohlenstoffdioxid, Kohlenwasserstoffe und Chlorwasserstoff umgewandelt werden. Zumindest ein Teil des Chlorwasserstoffs reagiert dann mit dem Calciumoxid bzw. Magnesiumoxid weiter zu Wasser und Calciumchlorid bzw. Magnesiumchlorid. Calciumchlorid bzw. Magnesiumchlorid ist für einen anschließenden Pyrolyseprozess unkritisch.

In einem Schritt 110 erfolgt eine Entgasung der Kunststoffschmelze bzw. der gebildeten Mischung in der Schneckenmaschine mittels zumindest einer an der Schneckenmaschine angeordneten Entgasungseinrichtung. Die Entgasungseinrichtung kann eine Vakuumseitenentgasung mit einer Rückhalteeinheit, wie einem Schmelzerückhalteaggregat, sein. Mittels der Entgasung bzw. Entgasungseinrichtung kann zumindest ein Teil des gebildeten Chlorwasserstoffgases abgeführt bzw. abgesaugt werden. Der Entgasungsschritt 110 kann kontinuierlich und/oder gleichzeitig mit dem Plastifizierschritt 106 und/oder Mischschritt 108 und/oder Umwandlungsschritt erfolgen. Es können mehrere, wie zwei oder drei, Entgasungseinrichtungen vorgesehen sein.

In einem Schritt 112 kann die in der Schneckenmaschine verarbeitete Kunststoffschmelze bzw. Mischung dann als Schmelze ausgetragen und/oder einem Pyrolysereaktor zugeführt werden.

Fig. 2 zeigt schematisch eine Vorrichtung 200 zur Aufbereitung von, insbesondere thermoplastischem, Kunststoffmaterial, wie Kunststoff-Recyclingmaterial und/oder Kunststoffabfall. Die Vorrichtung 200 kann zur Durchführung des vorstehend und/oder nachfolgend beschrieben Verfahrens dienen und/oder dazu ausgebildet sein.

Die Vorrichtung 200 weist eine Schneckenmaschine 202, eine Zuführeinrichtung und/oder Dosiereinrichtung 204 und mindestens eine Entgasungseinrichtung 206 auf.

Die Schneckenmaschine 202 ist als Zweiwellen-Schneckenmaschine, wie Doppelschneckenextruder, ausgebildet und weist zwei Behandlungselement-Wellen 208 mit mehreren Schneckenelementen auf. Die Behandlungselement-Wellen 208 weisen jeweils einen Durchmesser und eine Verfahrenslänge auf, wobei die Verfahrenslänge mindestens das 32-fache des Durchmessers, insbesondere mindestens das 48-fache des Durchmessers, beträgt. Die beiden Behandlungselement-Wellen 208 sind in zwei einander überlappenden Gehäusebohrungen 210 angeordnet, die im Querschnitt die Form einer liegenden Acht haben. In den Gehäusebohrungen 210 sind die Behandlungselement-Wellen 208 konzentrisch zu zugehörigen Drehachsen angeordnet. Die Behandlungselement-Wellen 208 sind gleichsinnig drehend und dicht kämmend ausgebildet. Der Antrieb der Behandlungselement-Wellen 208 erfolgt mittels eines elektrischen Antriebsmotors 212. Zwischen den Behandlungselement-Wellen 208 und dem Antriebsmotor sind ein Verzweigungsgetriebe 214 und eine Kupplung 216 angeordnet.

Die Schneckenmaschine 202 weist ferner eine Zuführöffnung 218 auf, an die ein Haupteinfülltrichter 220 angeschlossen ist und welche in die Gehäusebohrungen 210 mündet. Die Zuführöffnung 218 dient zum Zuführen des Kunststoffmaterials und des Zusatzstoffes zum Umwandeln von organischen Chloriden in anorganische Chloride in die Schneckenmaschine 202. Der Haupteinfülltrichter 220 wird von der Zuführeinrichtung und/oder Dosiereinrichtung 204 mit Kunststoffmaterial und dem Zusatzstoff gespeist. Zusätzlich oder alternativ kann die Schneckenmaschine 202 eine Seitenbeschickung aufweisen, die zum Zuführen des Kunststoffmaterials und/oder Zusatzstoffes ausgebildet ist.

Die Zuführeinrichtung und/oder Dosiereinrichtung 204 weist mindestens einen Einfülltrichter 222, über diesen das Kunststoffmaterial, wie Kunststoffrecyclingagglomerat und der Zusatzstoff zugeführt werden kann. Der Zusatzstoff ist beispielsweise pulverförmig. Der Zusatzstoff kann ein Metallchlorid, Metallhydroxid, Metallstearat, Zeolith, Carbonat oder Metalloxid, wie Calciumoxid oder Magnesiumoxid, sein. Die Zuführeinrichtung und/oder Dosiereinrichtung 204 weist ferner einen Vorrats- oder Aufbewahrungsbehälter 224 und eine gravimetrisch oder volumetrisch betriebene Dosiereinrichtung 226 auf, welche das Kunststoffmaterial und/oder den Zusatzstoff kontinuierlich und/oder dosiert dem Haupteinfülltrichter 220 der Schneckenmaschine 202 zuführen kann.

Die Behandlungselement-Wellen 208 sind zum Plastifizieren des zugeführten Kunststoffmaterials zu einer Kunststoffschmelze und zum Mischen der Kunststoffschmelze mit dem zugeführten Zusatzstoff zu einer Mischung ausgebildet, wobei zumindest ein Teil der in der Kunststoffschmelze enthaltenen organischen Chloride mittels des Zusatzstoffs in anorganische Chloride umgewandelt werden kann. Während des Plastifizierens und/oder Mischens kann mittels des zugeführten Zusatzstoffs als Katalysator Chlorwasserstoff, insbesondere Chlorwasserstoffgas, und mittels des zugeführten Zusatzstoffs als Reaktant ein anorganisches Chlorid, beispielsweise Calciumchlorid oder Magnesiumchlorid, gebildet werden. Dabei kann beispielsweise Polyvinylchlorid katalytisch mithilfe des Calciumoxids bzw. Magnesiumoxids in Wasser, Kohlenstoffdioxid, Kohlenwasserstoffe und Chlorwasserstoff umgewandelt werden. Zumindest ein Teil des Chlorwasserstoffs reagiert dann mit dem Calciumoxid bzw. Magnesiumoxid weiter zu Wasser und Calciumchlorid bzw. Magnesiumchlorid.

Die mindestens eine Entgasungseinrichtung 206 ist an der Schneckenmaschine 202 angeordnet und zur Entgasung der Kunststoffschmelze bzw. der gebildeten Mischung in der Schneckenmaschine 202 ausgebildet. Die mindestens eine Entgasungseinrichtung 206 kann beheizt sein bzw. eine Heizeinheit aufweisen. Die mindestens eine Entgasungseinrichtung 206 ist als eine Vakuumseitenentgasung ausgebildet, die eine Rückhalteeinheit, wie Schmelzerückhalteaggregat, 228, einen Separator 230, einen Kondensator 232 und eine Absaugpumpe 234 aufweist. In dem Kondensator 232 können gasförmige Flüssigkeiten kondensieren. Die mindestens eine Entgasungseinrichtung 206 kann seitlich an einer Entgasungsöffnung der Schnecken-maschine 202 angebracht sein. Mittels der Entgasung bzw. Entgasungseinrichtung kann zumindest ein Teil des gebildeten Chlorwasserstoffgases abgeführt bzw. abgesaugt werden. Die mindestens eine Entgasungseinrichtung 206 ist dazu ausgebildet, kontinuierlich und/oder gleichzeitig während dem Plastifizieren und/oder Mischen und/oder Umwandeln eine Entgasung durchzuführen. Im vorliegendem Ausführungsbeispiel weist die Vorrichtung 200 drei stromabwärts hintereinander angeordnete Entgasungseinrichtungen 206 auf, die im Wesentlichen gleich ausgebildet sind. Zwei der Entgasungseinrichtungen 206, beispielsweise die beiden stromabwärts der ersten Entgasungseinrichtung 206 angeordneten Entgasungseinrichtungen 206, können wirksam zusammengeschalten sein.

Die Schneckenmaschine 202 weist ferner an ihrem stromabwärts liegenden Ende eine Austrittsöffnung 236 auf, die so ausgebildet ist, dass durch die Austrittsöffnung 236 die verarbeitete Kunststoffschmelze aus dem Inneren der Schneckenmaschine 202 ausbringbar ist.

Zur Steuerung weist die Vorrichtung 200 eine Steuereinrichtung 238 auf. Mittels der Steuereinrichtung 238 sind insbesondere die Schneckenmaschine 202, die Zuführeinrichtung und/oder Dosiereinrichtung 204 und/oder die Entgasungseinrichtungen 206 steuerbar.

Im Übrigen wird ergänzend insbesondere auf Fig. 1 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl der Schritte des Verfahrens kann variiert werden.

### Bezugszeichen

- 100: Aufbereitungsverfahren
- 102: Schritt zum Zuführen des Kunststoffmaterials
- 104: Schritt zum Zuführen des Zusatzstoffes
- 106: Schritt zum Plastifizieren des Kunststoffmaterials
- 108: Schritt zum Mischen der Kunststoffschmelze mit dem Zusatzstoff
- 110: Schritt zum Entgasen der Kunststoffschmelze bzw. Mischung
- 112: Schritt zum Austragen und/oder Zuführen der Schmelze

- 200: Aufbereitungsvorrichtung
- 202: Schneckenmaschine
- 204: Zuführeinrichtung und/oder Dosiereinrichtung
- 206: Entgasungseinrichtungen
- 208: Behandlungselement-Wellen
- 210: Gehäusebohrungen
- 212: Antriebsmotor
- 214: Verzweigungsgetriebe
- 216: Kupplung
- 218: Zuführöffnung
- 220: Haupteinfülltrichter der Schneckenmaschine
- 222: Einfülltrichter der Zuführeinrichtung und/oder Dosiereinrichtung
- 224: Vorrats- oder Aufbewahrungsbehälter
- 226: Dosiereinrichtung
- 228: Schmelzerückhalteaggregat
- 230: Separator
- 232: Kondensor
- 234: Absaugpumpe
- 236: Austrittsöffnung
- 238: Steuereinrichtung

## Patentansprüche

1. Verfahren (100) zur Aufbereitung von, insbesondere thermoplastischem, Kunststoffmaterial, wie Kunststoff-Recyclingmaterial und/oder Kunststoffabfall, umfassend folgende Schritte:
- Zuführen (102) des Kunststoffmaterials in eine Schneckenmaschine (202);
- Zuführen (104) eines Zusatzstoffes zum Umwandeln von organischen Chloriden in anorganische Chloride in die Schneckenmaschine (202);
- Plastifizieren (106) des zugeführten Kunststoffmaterials mittels der Schneckenmaschine (202) zu einer Kunststoffschmelze; und
- Mischen (108) der Kunststoffschmelze mit dem zugeführten Zusatzstoff mittels der Schneckenmaschine (202) zu einer Mischung, wobei zumindest ein Teil der in der Kunststoffschmelze enthaltenen organischen Chloride mittels des Zusatzstoffs in anorganische Chloride umgewandelt wird.

2. Verfahren (100) nach Anspruch 1, **dadurch gekennzeichnet, dass** der Zusatzstoff ein Metallchlorid oder ein Metallstearat oder ein Metalloxid, insbesondere Calciumoxid oder Magnesiumoxid, oder ein Metallhydroxid, insbesondere Calciumhydroxid oder Magnesiumhydroxid, oder ein Zeolith oder ein Carbonat, insbesondere Hydrogencarbonat, ist und/oder aufweist.

3. Verfahren (100) nach wenigstens einem der vorhergehenden Ansprüche, **dadurch gekennzeichnet, dass** der Zusatzstoff als Katalysator und/oder Reaktant wirkt.

4. Verfahren (100) nach wenigstens einem der vorhergehenden Ansprüche, **dadurch gekennzeichnet, dass** während des Plastifizierens (106) und/oder Mischens (108) mittels des Zusatzstoffs als Katalysator Chlorwasserstoff, insbesondere Chlorwasserstoffgas, gebildet wird.

5. Verfahren (100) nach wenigstens einem der vorhergehenden Ansprüche, **dadurch gekennzeichnet, dass** während des Plastifizierens (106) und/oder Mischens (108) mittels des Zusatzstoffs als Reaktant ein anorganisches Chlorid, insbesondere Calciumchlorid oder Magnesiumchlorid, gebildet wird.

6. Verfahren (100) nach wenigstens einem der vorhergehenden Ansprüche, **dadurch gekennzeichnet, dass** die Kunststoffschmelze eine Temperatur zwischen 100°C und 400°C, insbesondere zwischen 280°C und 330°C aufweist.

7. Verfahren (100) nach wenigstens einem der vorhergehenden Ansprüche, **dadurch gekennzeichnet, dass** der Zusatzstoff über eine Zuführöffnung (218), insbesondere Haupt-Zuführöffnung, der Schneckenmaschine (202), insbesondere einer Einzugszone der Schneckenmaschine (202), zugeführt wird.

8. Verfahren (100) nach wenigstens einem der vorhergehenden Ansprüche, **dadurch gekennzeichnet, dass** der Zusatzstoff über eine Zuführöffnung, insbesondere stromabwärts einer Haupt-Zuführöffnung der Schneckenmaschine (202) und/oder stromabwärts einer Einzugszone der Schneckenmaschine (202), der Schneckenmaschine (202) zugeführt wird.

9. Verfahren (100) nach wenigstens einem der vorhergehenden Ansprüche, **dadurch gekennzeichnet, dass** eine Entgasung (110) der Kunststoffschmelze bzw. der gebildeten Mischung in der Schneckenmaschine (202) mittels zumindest einer an der Schneckenmaschine (202) angeordneten Entgasungseinrichtung (206) erfolgt.

10. Verfahren (100) nach wenigstens einem der vorhergehenden Ansprüche, **dadurch gekennzeichnet, dass** die in der Schneckenmaschine (202) verarbeitete Kunststoffschmelze bzw. Mischung als Schmelze ausgetragen (112) und/oder einem Pyrolysereaktor zugeführt (112) wird.

11. Verfahren (100) nach wenigstens einem der vorhergehenden Ansprüche, **dadurch gekennzeichnet, dass** die Schneckenmaschine (202) eine Mehrwellen-Schneckenmaschine, insbesondere eine Zweiwellen-Schneckenmaschine, ist.

12. Vorrichtung (200) zur Aufbereitung von, insbesondere thermoplastischem, Kunststoffmaterial, wie Kunststoff-Recyclingmaterial und/oder Kunststoffabfall, umfassend eine Schneckenmaschine (202) mit
- zumindest einer Zuführöffnung (218) zum Zuführen des Kunststoffmaterials und/oder eines Zusatzstoffes zum Umwandeln von organischen Chloriden in anorganische Chloride in die Schneckenmaschine (202); und
- zumindest einer Behandlungselement-Welle (208) zum Plastifizieren des zugeführten Kunststoffmaterials zu einer Kunststoffschmelze und zum Mischen der Kunststoffschmelze mit dem zugeführten Zusatzstoff zu einer Mischung,
wobei zumindest ein Teil der in der Kunststoffschmelze enthaltenen organischen Chloride mittels des Zusatzstoffs in anorganische Chloride umgewandelt wird.

13. Vorrichtung (200) nach Anspruch 12, **dadurch gekennzeichnet, dass** die zumindest eine Behandlungselement-Welle (208) einen Durchmesser und eine Verfahrenslänge aufweist, wobei die Verfahrenslänge mindestens das 32-fache des Durchmessers, insbesondere mindestens das 48-fache des Durchmessers, beträgt.

14. Vorrichtung (200) nach wenigstens einem der vorhergehenden Ansprüche 12 bis 13, **dadurch gekennzeichnet, dass** die Schneckenmaschine (202) als eine Mehrwellen-Schneckenmaschine, insbesondere Zweiwellen-Schneckenmaschine, ausgebildet ist.

15. Vorrichtung (200) nach wenigstens einem der vorhergehenden Ansprüche 12 bis 14, **dadurch gekennzeichnet, dass** die Vorrichtung (200) zumindest eine Entgasungseinrichtung (206) aufweist, die an der Schneckenmaschine (202) angeordnet und zur Entgasung der Kunststoffschmelze bzw. der gebildeten Mischung in der Schneckenmaschine (202) ausgebildet ist.

16. Verwendung einer Vorrichtung (200) nach wenigstens einem der vorhergehenden Ansprüche 12 bis 15 zur Aufbereitung von, insbesondere thermoplastischem, Kunststoffmaterial, wie Kunststoff-Recyclingmaterial und/oder Kunststoffabfall, wobei zumindest ein Teil der in der Kunststoffschmelze enthaltenen organischen Chloride mittels des Zusatzstoffs in anorganische Chloride umgewandelt wird.
